# EUROPEAN PATENT SPECIFICATION

(11) **EP 1 775 509 B1**
(45) Date of publication and mention of the grant of the patent: **27.01.2010**
(21) Application number: 06122081.0
(22) Date of filing: 11.10.2006
(51) Int. Cl.: F16L 27/08, B29C 45/00

(54) **Method of fabricating a molded hydraulic joint**
Verfahren zur Herstellung einer spritzgegossenen Hydraulikverbindung
Procédé de fabrication d'un joint hydraulique

(30) Priority: 14.10.2005 IT VA20050057
(43) Date of publication of application: 18.04.2007
(73) Proprietor: Seprio Plast ZN S.r.l., 21049 Tradate (IT)
(72) Inventor: Zorzi, Paolo, 21049 Tradate (IT)
(74) Representative: Pellegri, Alberto

(56) References cited:
- EP-A1- 0 583 599
- DE-A1- 1 956 220
- DE-U1- 29 610 385
- FR-A- 2 605 709
- NL-A- 7 600 928
- US-A- 4 906 010
- US-A- 4 946 204

## Description

### FIELD OF THE INVENTION

Object of the present invention is a method of fabricating hydraulic joints of molded thermoplastic material having a perfectly flat and smooth seal surface and a collar for retaining a gasket.

### BACKGROUND OF THE INVENTION

Generally, in hydraulic and domestic appliance industries, specially for hydraulic connections of washing machines, dish washers and alike appliances, hydraulic joints are employed for connecting the appliance to the water mains. Commonly, many of these hydraulic joints (couplings, nipples and the like) are made of thermoplastic material US 4 946 204 discloses such common hydraulic joints. The present application refers exclusively to hydraulic joints made of a moldable thermoplastic material.

The fact that household appliances are used by persons that generally are not experts of hydraulic connections and that a misfunctioning of hydraulic joints makes impossible to use the appliance and may cause costly spillages, must be considered. In general, users are unable to remedy to any leak even of minor entity. Moreover, these appliances are often moved and transported and as a consequence certain small parts, for example hydraulic gaskets made of degradable material are often lost. Even these inadvertent or apparently insignificant occurrences may in practice put out of order the appliance or cause spillings because the user generally does not know how to remedy nor has a replacement gasket available.

Malfunctioning is rather common in known thermoplastic hydraulic joints (couplings, nipples, fittings). In fact, these components are typically molded in two spatially specular half molds or shells. As a result, the surface of these connection flange inevitably has two rectilinear tale-telling ridges extending along a diameter that even if only few microns high negatively affect the achievement of a perfectly leak-proof seal. Therefore, these two minuscule ridges must necessarily be mechanically abraded off. Of course, this operation implies an additional fabrication cost. Moreover, the abrading off of these ridges leaves the flange surface no longer perfectly smooth but with roughened areas that may themselves be a cause of a seepage of the fluid after having connected the joint.

### SUMMARY OF THE INVENTION

The objective of the present invention is to eliminate the above-discussed inconveniences and drawbacks.

A method of thermoplastic molding of hydraulic joints has now been found that is capable of ensuring the generation of a perfectly flat and smooth surface of the coupling face of a flange portion of the molded joint besides permitting to generate a collar suitable to retain in place a gasket of a compressible elastic material that is eventually compressed onto the connection flange of the joint.

By the present invention, not only all the above discussed drawbacks of known molded hydraulic joints made of thermoplastic material are overcome but in addition the joints made according to the molding process of this invention have a practically unlimited duration of leak-proof operation and the elastic gaskets remain securely in place when the joint is disconnected for moving or transporting the appliance. The gasket may, if needed, be easily and quickly substituted with a new one even by an unskilled person.

These and other advantages will appear even more clearly in the following description and by referring to the attached drawings.

The invention is defined in the annexed claims.

### BRIEF DESCRIPTION OF THE DRAWINGS

With reference to the attached drawings, a possible embodiment of this invention will be described in detail for solely illustrative purpose.
**Figure 1** schematically shows a sectioned mold for molding an hydraulic joint of a thermoplastic material according to a typical arrangement commonly used in the industry.
**Figure 2** schematically shows a cross section of a mold for molding an hydraulic joint of thermoplastic material according to the process of the present invention.
**Figure 3** is a partially sectioned view of a rectilinear hydraulic joint of commonly known type as it is extracted from a mold similar to the one depicted in Figure 1.
**Figure 4** is a section view of an elastic gasket destined to be forcibly installed in the throat of the hydraulic joint of Figure 3.
**Figure 5** is a partially sectioned view of a threaded crown for tightening the hydraulic joint.
**Figure 6** shows a partially cross sectioned view of an hydraulic elbow-type joint of known type, as is extracted from a mold of traditional split structure as that depicted in Figure 1.
**Figure 7** is a sectional view of an elastic gasket to be forcibly inserted in a throat portion of the molded hydraulic joint depicted in Figure 6.
**Figure 8** is a partially sectioned view of a threaded crown for tightening the hydraulic joint of Figure 6.
**Figure 9** is a view of the seal surface of the flange portion of the joint of Figure 3, as well as of the joint of Figure 6.
**Figure 10** is a partially sectional view of an assembly of a hose connected at one end to a rectilinear hydraulic joint of molded thermoplastic material made according to the present invention and at the other end to a hydraulic elbow joint also of molded thermoplastic material and made according to this invention.
**Figure 11** is a partially sectional view of a rectilinear hydraulic joint of thermoplastic material prior to be finished, as extracted from the mold according to the present invention depicted in Figure 2.
**Figure 12** shows the flat and smooth sealing surface of the flange of the joints depicted in Figures 11, 14 and 10, that is of the connection flange of hydraulic joints made of thermoplastic material made according to the present invention.
**Figure 13** shows a swager that according to the process of this invention flares the tubular end of the molded joint depicted in Figure 11, conferring to it the shape of a flared out collar as shown in Figure 14.
**Figure 14** is a partially cross sectional view of the end of a hydraulic joint of this invention, wherein, as depicted in Figure 10, a sealing gasket of elastic material is forcibly pulled on.
**Figure 15** is a cross sectional view of a gasket of elastic material for leak-proof sealing of hydraulic joints of thermoplastic material made according to the process of this invention.

### DESCRIPTION OF THE INVENTION

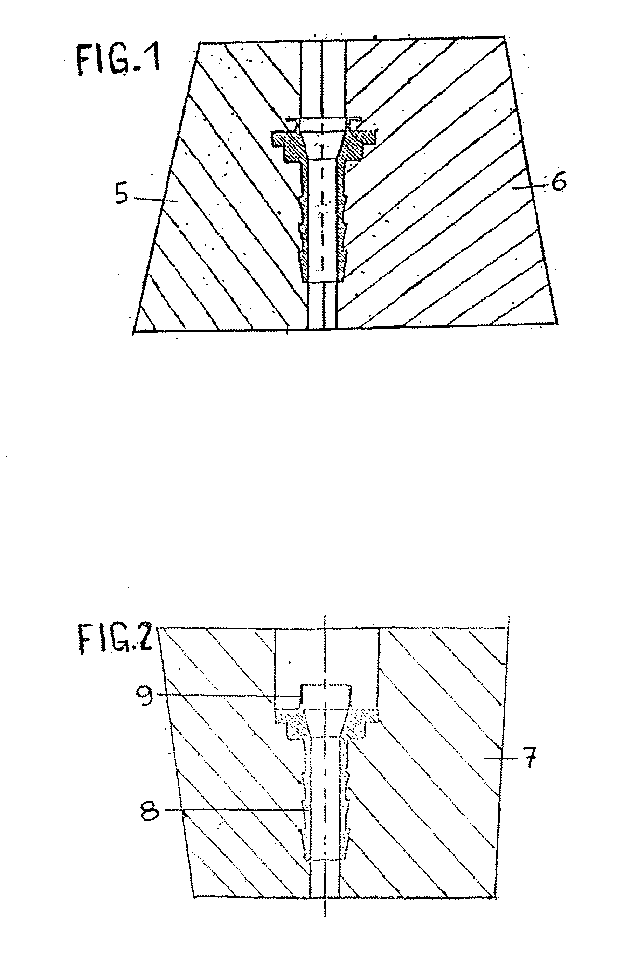

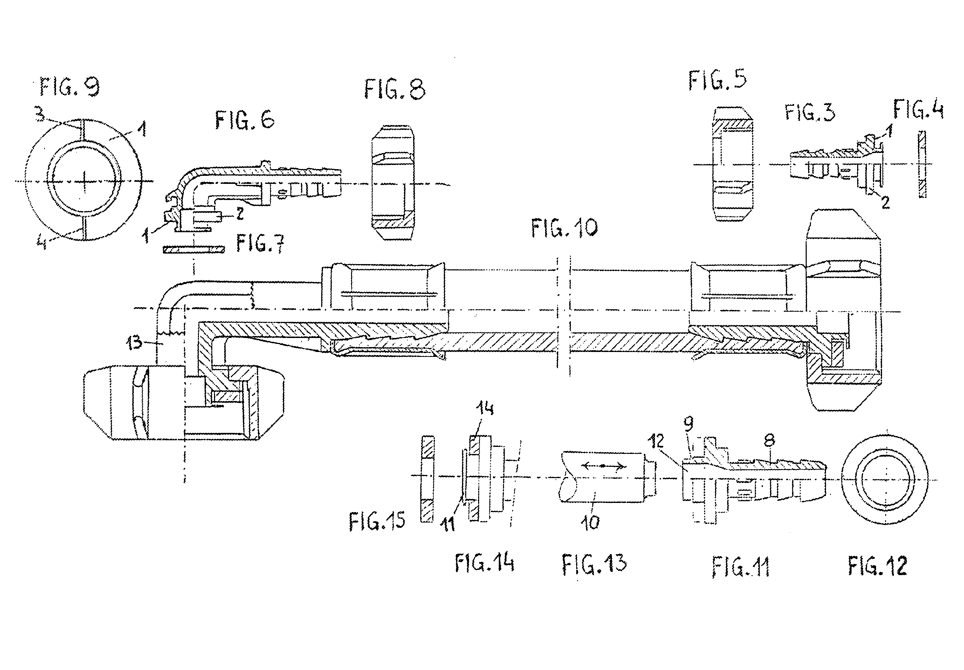

As illustrated for comparison purposes, the known hydraulic joints of thermoplastic material of Figures 3 and 6 are molded in molds that are composed of two substantially specular half shells 5 and 6 and of a core pin that is held in the cavity of the mold to shape the flow passage through the joint of the type depicted in Figure 1. As a consequence of the use of a traditional longitudinally split mold structure, the seal surface of the connection flange 2 of the joint as extracted from the mold, inevitably has two hairline-like ridges 3 and 4 that must be removed.

By contrast, the hydraulic joints of molded thermoplastic material made according to the present invention, as illustrated in Figures 2, 11, 12, 13, 14, are molded in a split mold that forms a main body 7 that defines a cavity, accomodating a coaxially held core pin for shaping the flow passage through the joint, that geometrically reproduces most of the whole outer shape of the thermoplastic hydraulic joint 8 eventually formed therein, and by a plug-like countermold that forms and shapes the flanged surface of the joint 8 and a central tubular extension 9. The axial core pin may even be an axial extension of the plug-like portion of the counter mold.

After having extracted the molded joint 8 from the monolithic mold piece 7, the tubular extension 9 defined by the plug portion of the mold with blade-like cross-section to promote an easy release is flared by a heated swager 10 that countersinks the rim portion of the tubular extension 9, conferring to it the shape of a gasket retention collar 11.

The heated swager 10 is regulated at a temperature appropriate for plastically deforming the thermoplastic material with which the joint 8 is made (or the elbow joint 13 or other types of joints). The swager 10 has an operating tip having a slightly lesser diameter than the hole 12 of the molded joint 8 and its diameter increases gradually according to certain curve as the distance from the tip end increases. This facilitates a permanent plastic deformation of the rim portion of the tubular extension 9 outwards for giving it the functional shape of a gasket retention collar.

To the swager 10 may be imparted a reciprocating motion of penetration in the hole 12 of the tubular extension of the joint 8 and of retraction therefrom, for repeating the flaring operation on the next molded joint 8 that is presented in of the swager 10 by automatic handling devices as commonly employed in automated machines.

Preferably, the swager 10 is pneumatically actuated in a rhythmic movement of penetration into the tubular extension 9 and of retraction from the flared out collar 11. Of course it may be driven with other means for example mechanically or hydraulically.

The flaring swager 10 is introduced in the hole 12 of the tubular extension 9, eventually after having inserted thereon a gasket 14.

Having described and illustrated the invention in the figures only for illustrative purposes, it is evident that numerous modifications of the shapes of molded flanged joints couplings and nipples can be made by implementing the basic features on which the present invention rests.

## Claims

1. A method of fabricating a hydraulic joint (8) of thermoplastic material having a tubular body and at least a connection flange having a surface suitable to receive thereon a gasket (14) and a tubular projection (9) terminating with a collar portion extending from the plane of said surface of the flange around its central hole for retaining said gasket, comprising the steps of
molding said tubular body in a split mold body (5,6) defining a cavity of definition of the outer surface of said tubular body and a cup-like open cavity into which a cooperating plug-like body is introduced for defining said surface of the flange and a central tubular extension (9),
extracting the molded joint from the mold; and
flaring a rim portion of said central tubular extension (9) from the surface of the flange with a swager (10) heated at a temperature sufficient to permanently deform the thermoplastic material of the rim portion to retain a gasket (14) inserted over said tubular extension.

2. The method of claim 1, wherein the gasket (14) is placed over said central tubular extension before flaring its rim portion.

3. The method of claim 1 wherein said swager shapes the rim portion of said tubular extension in the form of a countersunk collar.

## Patentansprüche

1. Verfahren zum Herstellen einer Hydraulikverbindung (8) aus thermoplastischem Material mit einem röhrenförmigen Körper und mindestens einem Verbindungsflansch, der eine Oberfläche aufweist, die geeignet ist, daran eine Dichtung (14) aufzunehmen, und einem röhrenförmigen Vorsprung (9), der mit einem Kranzabschnitt endet, der sich von der Ebene der Oberfläche des Flansches um sein Mittelloch zum Halten der Dichtung erstreckt, das die Schritte aufweist:
Formen des röhrenförmigen Körpers in einem mehrteiligen Formkörper (5,6), der einen Definitionshohlraum der Außenfläche des röhrenförmigen Körpers und einen schalenförmigen offenen Hohlraum definiert, in den ein zusammenwirkender stopfenförmiger Körper zum Definieren der Oberfläche des Flansches und einer mittleren röhrenförmigen Erweiterung (9) eingeführt wird,
Herausziehen der geformten Verbindung aus der Form; und
Aufweiten eines Randabschnitts der mittleren röhrenförmigen Erweiterung (9) aus der Oberfläche des Flansches mit einem Streckwerkzeug (10), das auf eine Temperatur erwärmt ist, die ausreicht, um das thermoplastische Material des Randabschnitts dauerhaft zu verformen, um eine Dichtung (14) zu halten, die über die röhrenförmige Erweiterung eingesetzt wird.

2. Verfahren nach Anspruch 1, wobei die Dichtung (14) über die mittlere röhrenförmige Erweiterung vor dem Aufweiten ihres Randabschnitts angeordnet wird.

3. Verfahren nach Anspruch 1, wobei das Streckwerkzeug den Randabschnitt der röhrenförmigen Erweiterung in der Form eines versenkten Kranzes formt.

## Revendications

1. Procédé de fabrication d'un raccord hydraulique (8) en matière thermoplastique, comportant un corps tubulaire et au moins une joue de connexion ayant une surface adaptée pour recevoir un joint (14) et une saillie tubulaire (9) se terminant avec une partie de collerette s'étendant à partir du plan de ladite surface de la joue autour de son trou central pour retenir ledit joint, comprenant les étapes suivantes :
mouler le corps tubulaire dans un corps de moule fendu (5, 6) définissant une cavité de définition de la surface extérieure du corps tubulaire et une cavité ouverte en forme de coupe dans laquelle est introduit un corps en forme de bouchon pour définir la surface de la joue et une extension tubulaire centrale (9),
extraire le raccord moulé du moule ; et
évaser une partie de bord de l'extension tubulaire centrale (9) à partir de la surface de la joue avec un mandrin (10) chauffé à une température suffisante pour déformer de façon permanente la matière thermoplastique de la partie de bord pour retenir un joint (14) inséré sur l'extension tubulaire.

2. Procédé selon la revendication 1, dans lequel le joint (14) est placé sur l'extension tubulaire centrale avant d'évaser sa partie de bord.

3. Procédé selon la revendication 1, dans lequel ledit mandrin forme la partie de bord de l'extension tubulaire avec la forme d'une collerette fraisée.
